# EUROPÄISCHE PATENTSCHRIFT

(11) **EP 1 118 510 B1**
(45) Veröffentlichungstag und Bekanntmachung des Hinweises auf die Patenterteilung: **12.11.2003**
(21) Anmeldenummer: 01100155.9
(22) Anmeldetag: 16.01.2001
(51) Int. Cl.: B60R 21/20

(54) **Gassack-Abdeckung mit Reisslinie**
Airbag cover with a tear seam
Couvercle de coussin gonflable avec ligne de rupture préférentielle

(30) Priorität: 20.01.2000 DE 20000956 U
(43) Veröffentlichungstag der Anmeldung: 25.07.2001
(73) Patentinhaber: TRW Automotive Safety Systems GmbH, 63743 Aschaffenburg (DE)
(72) Erfinder: Derrick, John-Oliver, 97265 Hettstadt (DE)
(74) Vertreter: Sties, Jochen, Dipl.-Ing.

(56) Entgegenhaltungen:
- EP-A- 0 844 142
- US-A- 5 499 842
- US-A- 6 003 895
- PATENT ABSTRACTS OF JAPAN vol. 1999, no. 05, 31. Mai 1999 (1999-05-31) & JP 11 034777 A (TAKATA EUROP VEHICLE SAFETY TECHNOL GMBH), 9. Februar 1999 (1999-02-09)
- PATENT ABSTRACTS OF JAPAN vol. 2000, no. 02, 29. Februar 2000 (2000-02-29) & JP 11 301398 A (TOYOTA MOTOR CORP), 2. November 1999 (1999-11-02)

## Beschreibung

Die Erfindung betrifft eine Gassack-Abdeckung für ein Fahrzeuginsassen-Rückhaltesystem mit wenigstens einer in die Innenseite der Abdeckung bis zu einer vorbestimmten Restwandstärke eingebrachten Reißlinie, wobei die Reißlinie einen Initialpunkt aufweist, an dem die Restwandstärke am geringsten ist. Eine Einrichtung nach dem Oberbegriff des Anspruchs 1 geht aus der JP 11 034 777 hervor.

Bei Versuchen hat sich gezeigt, daß es beim Aufreißen der Gassack-Abdeckung außer am Initialpunkt auch an anderen Stellen zu einer Spannungskonzentration kommen kann. Insbesondere wenn an der Außenseite der Abdeckung eine Struktur angebracht ist, etwa eine Vertiefung oder Bohrungen zur Befestigung einer Plakette mit einem Markenzeichen, führt die Kerbwirkung dieser Strukturen zu erhöhten Spannungen. Es besteht dann die Gefahr, daß die Abdeckung nicht entlang der vorgesehenen Reißlinie beginnend am Initialpunkt aufreißt, sondern eben an der Stelle der höchsten Spannung, also beispielsweise im Bereich einer vorhandenen Plakette. Dies hat aber zur Folge, daß die Entfaltung des Gassackes nicht wie vorgesehen stattfindet und damit die ordnungsgemäße Funktion des Rückhaltesystems beeinträchtigt ist. Außerdem besteht die Gefahr, daß sich die Plakette von der Abdeckung löst und ein zusätzliches Verletzungsrisiko darstellt.

Die Erfindung schafft eine Gassack-Abdeckung, die bei der Entfaltung des Gassackes an einem genau vorbestimmten Punkt aufzureissen beginnt.

Zu diesem Zweck sind bei einer Gassack-Abdeckung der eingangs genannten Art an der Innenseite der Abdeckung Versteifungsrippen ausgeformt, die sich entlang einer Linie erstrecken, welche den Initial-Punkt tangiert. Damit wird gewährleistet, daß die Spannungen in der Abdeckung zum Initialpunkt geleitet werden und der Aufreißvorgang genau dort beginnt.

Gemäß einer Ausführungsform der Erfindung ist vorgesehen, daß an der Abdeckung eine Plakette angebracht ist und die Versteifungsrippen um die Plakette herumgeführt sind. Auf diese Weise wird vermieden, daß im Bereich der Plakette eine Spannungskonzentration stattfindet und die Abdeckung dort aufreißt.

Weitere Vorteile der Erfindung ergeben sich aus der Beschreibung der bevorzugten Ausführungsform, welche sich auf die beigefügten Zeichnungen bezieht, in welchen zeigen:
- Fig. 1 eine erfindungsgemäße Gassack-Abdeckung in einer Gesamtansicht von der dem Fahrzeuginsassen zugewandten Seite;
- Fig. 2 einen Querschnitt durch die Gassack-Abdeckung aus Fig. 1 entlang der Linie II-II von Fig.1.

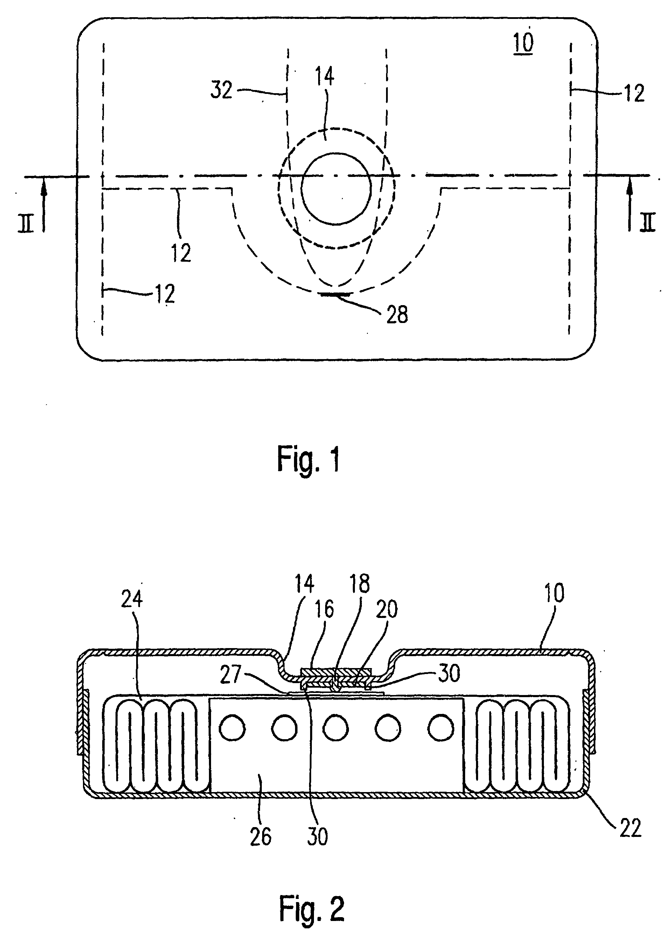

Die in Fig. 1 dargestellte Gassack-Abdeckung 10 ist an der dem Fahrzeuginsassen abgewandten Innenseite mit einer Reißlinie 12 versehen, die in der Zeichnung als unterbrochene Linie angedeutet ist. In einer Vertiefung 14, etwa in der Mitte der Abdeckung 10 ist eine Plakette 16 angebracht.

Wie in Fig. 2 zu sehen ist, ist die Plakette 16 in üblicher Weise mittels eines Niets 18 und einer Konterscheibe 20 an der Abdeckung 10 befestigt. Die Abdeckung 10 ist auf einem Gassack-Modul, bestehend aus einem Gehäuse 22, einem Gassack 24 und einem Gasgenerator 26, befestigt. Zwischen der Abdeckung 10 und dem Gassack 24 befindet sich ein Kontakt 27, mit dem eine Hupe ausgelöst werden kann. Die Wandstärke der Abdeckung 10 ist im Bereich der Reißlinie 12 verringert. Im Verlauf der Reißlinie 12 befindet sich der sogenannte Initialpunkt 28, an dem die verbleibende Restwandstärke der Abdeckung 10 am geringsten ist. Dieser Initialpunkt 28 dient dazu, in der Abdeckung 10 einen Ort festzulegen, an dem das Aufreißen der Reißlinie 12 beginnen soll. An der Innenseite der Abdeckung 10 sind Rippen 30 ausgeformt, die sich entlang einer Linie 32 erstrecken. Die Linie 32 ist um die Konterscheibe 20 der Plakette 16 herumgeführt und tangiert in einem elliptischen Bogen den Initialpunkt 28. Die Rippen 30 können ohne zusätzlichen Aufwand bei der Herstellung der Abdeckung 10 realisiert werden.

Wenn der Gassack 24 vom Gasgenerator 26 aufgeblasen wird, beginnt dieser sich zu entfalten und drückt gegen die Abdeckung 10. Dadurch wird die Abdeckung 10 nach außen gedehnt; es entsteht im Material der Abdeckung 10 eine Spannung. Diese Spannung hat dort Maximalwerte, wo die Materialstärke am geringsten ist, also im Verlauf der Reißlinie 12, insbesondere am Initialpunkt 28. Aber auch die Öffnung in der Abdeckung 10, durch welche der Befestigungsniet 18 geführt ist, stellt potentiell einen Punkt dar, an dem eine Spannungskonzentration auftreten könnte. Die Spannung wird allerdings durch die größere Materialstärke im Bereich der Rippen 30 entlang der Linie 32, an der Plakette 16 vorbei, zum Initialpunkt 28 geleitet, so daß dort die Spannungskonzentration stattfindet und die Abdeckung 10 an dieser Stelle zuerst aufreißt. Durch die Kerbwirkung der Reißlinie 12 ist gewährleistet, daß sich die Abdeckung 10 anschließend in der vorgesehenen Weise öffnet. Selbst wenn sich der Riß nicht wie vorgesehen entlang der Reißlinie 12 fortpflanzen sollte, wird er doch durch die erhöhte Materialstärke der Rippen 30 daran gehindert, sich unter der Plakette 16 auszubreiten. Daher besteht auch nicht die Gefahr, daß sich die Plakette 16 aus dem Material der Abdeckung 10 löst.

Ein weiterer Vorteil der Rippen 30 besteht darin, die Abdeckung 10 zu versteifen, so daß die zur Betätigung des Hupenkontaktes 27 erforderliche Kraft besser verteilt wird.

Selbstverständlich ist die Anordnung und der Verlauf der Rippen nicht auf die gezeigte Ausführungsform beschränkt. Bei Bedarf können auch mehr Rippen vorgesehen werden.

## Patentansprüche

1. Gassack-Abdeckung (10) für ein Fahrzeuginsassen-Rückhaltesystem mit wenigstens einer in die Innenseite der Abdeckung bis zu einer vorbestimmten Restwandstärke eingebrachten Reißlinie (12), wobei die Reißlinie einen Initialpunkt (28) aufweist, an dem die Restwandstärke am geringsten ist,
**dadurch gekennzeichnet,**
**daß** an der Innenseite der Abdeckung (10) Versteifungsrippen (30) ausgeformt sind, die sich entlang einer Linie (32) erstrecken, welche den Initialpunkt (28) tangiert.

2. Abdeckung nach Anspruch 1, **dadurch gekennzeichnet, daß** an der Abdeckung (10) eine Plakette (16) angebracht ist und die Versteifungsrippen (30) um die Plakette herumgeführt sind.

## Claims

1. A gas bag cover (10) for a vehicle occupant restraint system, comprising at least one tear line (12) incorporated into the inner side of the cover up to a predefined remaining wall thickness, the tear line having an initial point (28) at which the remaining wall thickness has its minimum,
**characterized in that**
reinforcement ribs (30) are formed on the inner side of the cover (10) which extend along a line (32) which is tangent to the initial point (28).

2. The cover as set forth in claim 1, **characterized in that** a badge (16) is applied to the cover (10) and that the reinforcement ribs (30) are guided around the badge.

## Revendications

1. Couvercle de coussin à gaz (10) pour un système de retenue des occupants d'un véhicule, comportant au moins une ligne de déchirure (12) ménagée dans la face intérieure du couvercle jusqu'à une épaisseur de paroi subsistante prédéterminée, la ligne de déchirure présentant un point initial (28) au niveau duquel l'épaisseur de paroi subsistante est la plus faible,
**caractérisé en ce que** sur la face intérieure du couvercle (10) sont formées des nervures de raidissement (30) qui s'étendent le long d'une ligne (32) qui est tangente au point initial (28).

2. Couvercle selon la revendication 1, **caractérisé en ce qu'**une plaquette (16) est montée sur le couvercle (10) et **en ce que** les nervures de raidissement (30) sont guidées autour de la plaquette.
